Europäisches Patentamt

European Patent Office

Office européen des brevets

(11) Publication number : **0 375 015 B1**

# (12) EUROPEAN PATENT SPECIFICATION

(45) Date of publication of patent specification :
**31.03.93 Bulletin 93/13**

(51) Int. Cl.⁵ : **H04B 3/23**

(21) Application number : **89203107.1**

(22) Date of filing : **07.12.89**

(54) **Method and device for adaptive digital cancellation of the echo generated in telephone connections with time-variant characteristics.**

(30) Priority : **21.12.88 IT 2303288**

(43) Date of publication of application :
**27.06.90 Bulletin 90/26**

(45) Publication of the grant of the patent :
**31.03.93 Bulletin 93/13**

(84) Designated Contracting States :
**AT BE CH DE ES FR GB GR IT LI NL SE**

(56) References cited :
**EP-A- 0 137 508**
**IEEE INTERNATIONAL CONFERENCE ON COMMUNICATIONS, PROCEEDINGS, Chicago, Illinois, 23rd - 26th June 1985, vol. 3, pages 1477-1481, New York, US ; S.T. ALXANDER et al. : "Adaptive telephony echo cancellation using fast kalman pole-zero modeling"**

(56) References cited :
**PATENT ABSTRACTS OF JAPAN, vol. 7, no. 65 (E-165)[1210], 18th March 1983 & JP-A-57 212 831**
**J.G. PROAKIS : "Digital Communications", International Student Edition, 1983, pages 413-417, McGraw-Hill International Book Co., Singapore**

(73) Proprietor : **SIEMENS TELECOMUNICAZIONI S.P.A.**
**SS. 11 Padana Superiore Km. 158**
**I-20060 Cassina de Pecchi (Milano) (IT)**

(72) Inventor : **Cannalire, Giacomo**
**Via Zappatoni, 12**
**I-20062 Cassano d'Adda (Milano) (IT)**
Inventor : **Premoli, Giacomo**
**Via Scheiwiller, 5**
**I-20139 Milano (IT)**
Inventor : **Ravasio, Roberto**
**Via Novelli, 9**
**I-24100 Bergamo (IT)**

## Description

The present invention relates to the field of signal transmission on telephone lines and in particular to a method and device for adaptive digital cancellation of the echo generated in telephone connections with time-variant characteristics.

It is known that telephone signals travel on lines which can be considered 1-way or 2-way telephone lines depending on the direction of travel thereof.

2-way lines, also called 2-wire lines, are generally used locally, mainly for the connection of telephone sets to the associated exchange.

1-Way lines, also called 4-wire lines regardless of the physical nature of the medium supporting them, are used generally for connections between telephone exchanges placed even at a considerable distance apart. In this case the connection can include sections by cable and/or radio link and either terrestrial or satellite.

As is known the coupling between a 2-way line and the corresponding 1-way lines for transmission and reception respectively is activated by the so-called hybrid coil.

For a connection to be complete it must include at least two hybrid coils. Each one accomplishes conversion from 2-wire line to 4-wire line and the reverse.

It is known that the hybrid coil has four ports, one connected to the 2-way line which costitutes the telephone pair, a second port connected to the 1-way transmission line, a third port connected to the 1-way reception line and a fourth port connected to a so-called balancing impedance.

Operation of the hybrid coil can be understood by examining the specific case in which for all the frequencies included in the voice band the impedance it presents at its ports is equal to that of the load connected to the respective ports. In this case the power present on the telephone pair is divided exactly in half between the 1-way transmission line and the balancing impedance. Similarly and independently the power present on the 1-way reception line is divided exactly in half between the telephone pair and the balancing impedance to allow separation of the transmitted signals from those received.

However this case is purely ideal. In practice coupling to the various ports of the hybrid coil is never perfect and the ensuing unbalancing causes signal reflection between them.

In particular part of the voice signal present at the reception port of the hybrid coil and coming from the far-end talker is transferred to the transmission port and thence back to the same talker who, while he is still talking, listens to what he said with delay equal to the time taken by the voice signal to complete the path from the remote hybrid coil and return.

The signal fraction played back is the echo of the signal transmitted and the path the echo completes from the point of generation to the point of listening is called 'echo channel'.

It has been proven that the effects of the echo are annoying for delays over a few tens of milliseconds and echo channel attenuations between 6dB and 15dB if appropriate corrective devices such as the so-called 'echo cancellers' are not adopted. These devices are usually inserted in 4-wire lines connected to an international exchange and blank the echo produced during the conversation by subtracting from the actual echo signal an estimate thereof.

Causes of unsteadiness can occur in the echo channel whose impulse response becomes a function variable in time and can significantly influence the performance of the canceller.

This phenomenon occurs in FDM-SSB-SC systems with a single physical communication route which transmits in both directions using carriers with different frequencies.

The modulation and demodulation frequencies of the carrier system, being generated locally, are not synchronized. This can cause a shift in the frequency of all the spectral components of the echo signal in relation to the signal sent.

This phenomenon, called 'phase roll', causes unsteadiness of the echo channel.

In accordance with the international trend in the matter as established for example by CCITT recommendation 311 the frequency shift between the two ends of a connection should not exceed 2Hz each way. Consequently the upper limit for total frequency shift on the echo path is 4Hz.

Echo cancellers presently known in the art usually use for the abovesaid estimate of the echo signal a transversal digital filter with adaptive coefficients which recopies the impulse response of the echo channel.

The estimate of the echo is obtained by the convolution process between the voice of the far-end talker and the impulse response of the transversal filter. The residual echo is obtained by subtracting the estimated echo from the actual echo.

The variations of the filter coefficients are defined by an optimization criterion and are realized by an adaptation algorithm.

The optimization criterion is usually based on minimization of the mean quadratic error or minimization of the power of the residual echo.

The adaptation algorithm is an iterative method which allows calculation of the coefficients by adding to the present value a correction proportional to the cross correlation sequence between the voice sample of the far-end talker corresponding to the coefficient under examination and the residual echo sample.

Echo cancellers suppress the echo signal only if it is lower than a predetermined threshhold by means of a nonlinear circuit called 'center clipper'.

In addition they have a double-talking detector circuit which, in the presence of the voice of the near-end talker, inhibits both updating of the coefficients of the transversal filter and operation of the center clipper so that it will not cut off said voice.

The echo cancellers carried out in accordance with the known art with a very long transversal filter have the serious drawback of low convergence speed if designed to produce an accurate estimate of the echo and of being inaccurate if sized to have high convergence speed.

These limitations allow use of said echo cancellers only in connections with stationary characteristics.

In connections affected by phase roll they are not usable because the rapid variations in time of the spectral characteristics of the echo signal do not allow the adaptation algorithm, because of its slowness, to converge toward the appropriate values of the coefficients of the filter whih varying time.

More recently, in order to reduce the number of arithmetical operations of the selected algorithm for the adaptation and to solve the problem of echo cancellation for connections of any distance affected by phase roll, there was developed an echo canceller based on a procedure described in the text of European patent application no. EP-A- 0 137 508, inventors R. Montagna and L. Nebbia, filed in the name of CSELT.

This canceller makes use of the fact that the impulse responses of the echo channels are characterized by a pure propagation delay followed by a zone approximately 6ms wide in which the impulse response is significantly different from zero. Consequently in accordance with the abovementioned procedure the echo signal propagation delay is evaluated for the purpose of adopting a short transversal filter whose coefficients correspond only with the significant part of the impulse response.

The limited number of coefficients to be updated makes the canceller faster in producing the echo estimate, also allowing use thereof in connections affected by a limited phase roll.

Although the abovementioned canceller has better performance than previous ones in connections affected by phase roll it is not capable of maintaining good operating performance in the presence of sustained phase rolls, e.g. on the order of 4Hz.

Accordingly the object of the present invention is to overcome the abovesaid drawbacks and indicate a method for cancelling the echo generated in telephone connections affected by phase roll.

The method in question estimates echo signal propagation delay in order to allow a simulation of the impulse response of the echo channel applicable only to the significant part thereof.

Said simulation is activated by a recursive digital filter with adaptive coefficients and allows securing of an estimate of the echo signal by causing samples of the voice signal of the far-end talker appropriately delayed and samples of the echo signal to reach the inputs of the filter.

The estimated echo is then subtracted from the actual echo to eliminate therefrom bothersome listening effects.

The filter coefficient adaptation algorithm is based on the minimization criterion of the mean square error or minimization of the power of the residual echo. Said algorithm is applied in an innovative manner termed 'square error decimation' which consists basically of adopting a square error calculation iteration frequency equal to the sampling frequency of the digital signals placed at the inputs of the filter divided by a decimation factor indicated hereinafter by the symbol M.

The echo channel has a transfer function comprising poles and zeros. Therefore desiring to simulate it with a transversal filter whose transfer function includes only zeros it would be necessary to considerably increase the number of coefficients of the filter without however obtaining a very accurate estimate. But by using the recursive filter, whose transfer function includes poles and zeros, it is possible to obtain a very accurate estimate of the echo channel transfer function.

The adaptation algorithm implemented has a higher convergence speed than the algorithm of the gradient method used in conventional echo cancellers. Therefore the echo canceller obtained in accordance with the implemented algorithm is capable of operating while maintaining good performance even in the presence of a 4Hz phase roll.

Square error decimation allows reduction of the number of arithmetic operations necessary for each calculation cycle of the adaptive coefficients to obtain more echo cancellers and optimize the use of microprocessors specialized in digital signal processing.

To attain said results the present invention has for its object a method and a device for adaptive digital cancellation of the echo generated in telephone connections with time-variant characteristics as defined in claims 1 and 8, respectively.

Other purposes and advantages of the present invention will be made clear by the following detailed description of an example of accomplishment thereof and by the annexed drawings given merely for explanatory and nonlimiting purposes wherein:-

FIG. 1 shows a functional block diagram of the echo canceller which is the object of the present invention,

FIG. 2 shows in greater detail the block designated by CAC in FIG. 1, and

FIGS. 3, 4 and 5 are flow charts of the program for the echo canceller shown in FIG. 1.

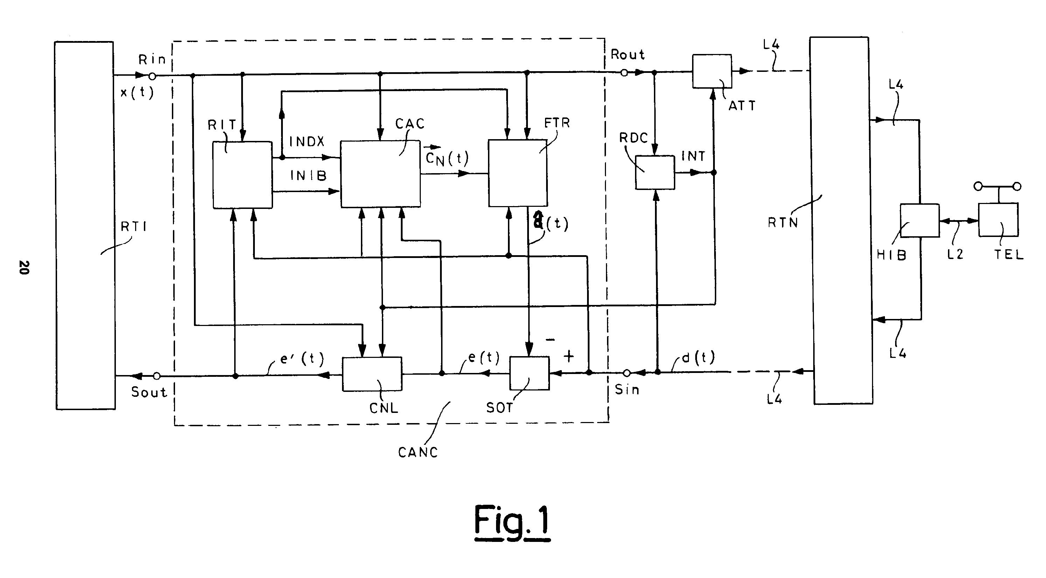

With reference to FIG. 1 there may be seen an echo canceller CANC which is the object of the present invention located near an international telephone exchange RTI and placed in series with a 4-wire telephone line which connects said exchange to a national exchange RTN.

The 4-wire line L4 is connected through the exchange RTN to a hybrid coil HIB which in turn is connected to a telephone set TEL by a 2-wire line L2.

The echo canceller CANC has four terminals designated Rin, Rout, Sin and Sout having the following meanings.

The terminal Rin is the input of a signal $x(t)$ which represents the voice of the far-end talker.

The terminal Rout is the output of said signal $x(t)$.

The terminal Sin is the input of a signal $d(t)$ which can be either the voice of the near-end talker or the echo of the signal $x(t)$ or both superimposed.

The terminal Sout is the output of a signal $e'(t)$ which represents either the voice of the near-end talker or, as will be better explained below, a residual echo of the signal $x(t)$.

In the case under examination all the signals indicated in the figures are digital, therefore the temporal variable $(t)$ is a discrete variable which undergoes increments of 125 μs each equal to the period P of the sampling frequency of the signals $x(t)$ and $d(t)$.

The terminals Rin and Sout of the canceller CANC are connected to the international telephone exchange RTI.

On the connection between the terminal Rout of CANC and the reception side of the line L4 (with reference to the exchange RTN) there is inserted an attenuator ATT. The terminal Rout is also connected to an input of a double talking detector block RDC.

The terminal Sin is connected to the other input of the block RDC and to the transmission side of the line L4 (with reference to the exchange RTN).

When the block RDC detects on the line L4 the simultaneous presence of voice signals from both talkers, it generates a signal INT which disables the canceller CANC and inserts the attenuator ATT.

The echo canceller CANC is functionally divisible in the blocks (a) a recursive digital filter FTR with adaptive coefficients which produces a signal $\hat{d}(t)$ which is an estimate of the echo $d(t)$, (b) a block CAC which calculates the adaptive coefficients of the filter FTR by means of an appropriate adaptation algorithm, (c) a subtractive block SOT which subtracts the estimated echo from the actual echo, (d) a block RIT which calculates the echo propagation delay $d(t)$ where by propagation delay is meant the total delay existing between the signal $x(t)$ at the output Rout of the canceller and the signal $d(t)$ at its input Sin, and (e) a block CNL designated 'center clipper' which can be considered a special case of echo suppressor accomplished in accordance with known techniques.

The voice signal $x(t)$ coming from the exchange RTI reaches the terminal Rin and thence reaches a first input of the blocks RIT, CAC, FTR and CNL.

The echo signal $d(t)$ coming from the exchange RTN reaches the terminal Sin and thence reaches a first input of the block SOT indicated in the figures by the symbol (+) and a second input of the blocks RIT, FTR and CAC.

At the output of the block FTR there is the estimated echo signal $\hat{d}(t)$ which reaches the second input of the block SOT indicated in the figures by the symbol (-).

At the output of the block SOT there is an error signal $e(t)$ which reaches a second input of the block CNL and a third input of the block CAC.

To a third input of the block FTR coming from the output of the block CAC there reaches a plurality of signals indicated in the figures by the vectorial symbol $\vec{C}_N(t)$. Said plurality comprises the adaptive coefficients of the filter FTR, N being their number.

The signal INT coming from the output of the block RDC arrives at the third input of the block CNL and the fourth input of the block CAC.

The signal $e'(t)$ coming from the output of the block CNL reaches the third input of the block RIT and the terminal Sout of CANC. At the two outputs of the block RIT are present two signals designated INDX and INIB.

The signal INIB is directed to a fifth input of the block CAC. The signal INDX which represents the propagation delay expressed as the number of intervals of duration 125 μs each is directed toward a sixth input of the block CAC and to a fourth input of the block FTR.

In operation let us suppose for the sake of simplicity the voice of a single far-end talker and also that the echo canceller has already reached operating conditions, then examining the other cases. In the case mentioned the signal INT is not present and the attenuator ATT lets pass the signal x(t) unchanged to the exchange RTN whence it continues to the hybrid coil HIB and the telephone TEL.

As mentioned above the hybrid coil HIB reflects a fraction of the signal x(t) on the line L4 again to the exchange RTN. Said signal fraction reaches the terminal Sin of the echo canceller CANC and is indicated in the figures as an echo signal d(t).

The filter FTR performs the estimate $\hat{d}(t)$ of the echo d(t) and sends it to the subtractor SOT which in turn subtracts it from the actual echo d(t) to obtain the error signal $e(t) = d(t) - \hat{d}(t)$, also termed 'residual echo'.

The block CNL is a residual echo silencing device which compares the residual echo samples e(t) with a threshhold value dependent upon the level of the signal x(t) . If the comparison shows that e(t) exceeds said fraction of x(t) the signal e(t) passes unchanged from the block CNL reaching the terminal Sout of the canceller; otherwise it is completely suppressed.

The filter FTR uses in the canceller which is the object of the present invention a recurrent filter with adaptive coefficients whose transfer function have poles and zeros. Said filter also comprises a known delaying circuit which delays the voice samples x(t) for time $t' = t - INDX$.

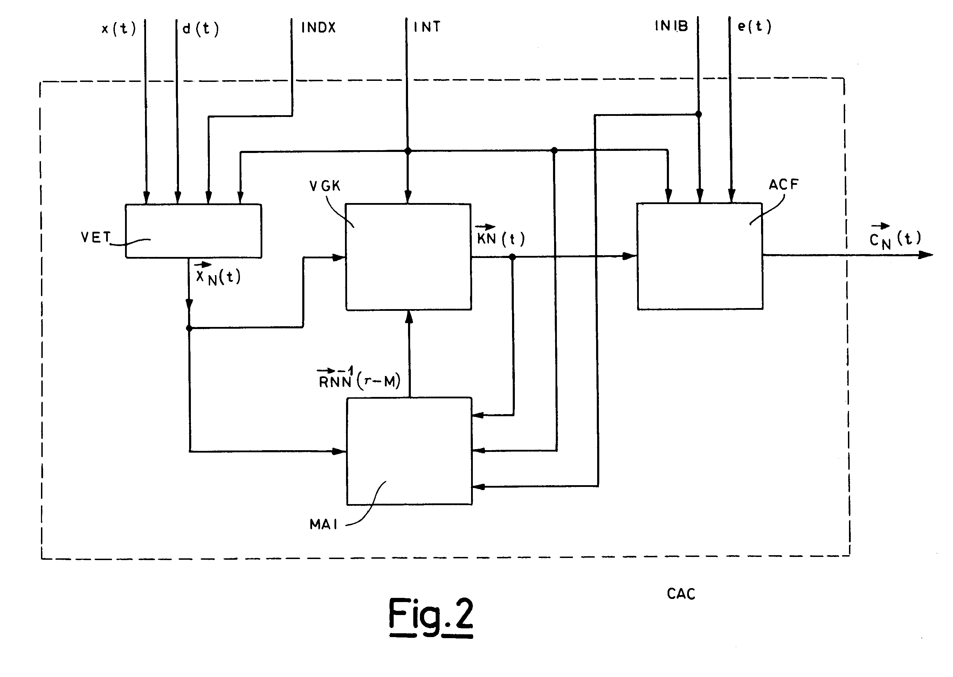

Said filter is accomplished in accordance with the known art for the design of digital filters and has two filtering sections designated respectively forward predictor and backward predictor both of which have adaptive coefficients calculated by the block CAC. The adaptation algorithm will be explained entirely in the detailed description of the operation of the block CAC given with reference to FIG. 2.

The estimate signal $\hat{d}(t)$ is obtained by a convolution process between the impulse response of the filter FTR and the inputs x(t) and d(t) in the manner indicated in the following formula.

$$\hat{d}(t) \;=\; \sum_{k=1}^{N_1} a_k x(t'-k) \;-\; \sum_{k=1}^{N_2} b_k d(t-k) \tag{1}$$

where $a_k$ indicates the adaptive coefficients of the forward predictor in the number $N_1$, $b_k$ those of the backward predictor in the number $N_2$, $x(t'-k)$ the delayed voice samples of the far-end talker and $d(t-k)$ the actual echo samples.

In the canceller described as an example there was adopted a filter FTR of the tenth order, consequently the numbers $N_1$ and $N_2$ are both equal to 10.

The estimate of the echo signal $\hat{d}(t)$ can be expressed in a more compact manner using the following vecatorial symbols:-

$$\hat{d}(t) \;=\; \vec{C}_N^{\,T}(t)\; \vec{X}_N(t) \tag{2}$$

where $\vec{C}_N^{\,T}(t)$ is the transposed vector of the adaptive coefficients $a_k$ and $b_k$, $N = N_1+N_2$, T is the generic transposition operator and $\vec{X}_N(t)$ is the vector which represents the entirety of the samples $x(t'-k)$ and $d(t-k)$ which is known as a vector of the input signal of the adaptive canceller. Said vector is calculated by the delaying circuit included in the filter FTR.

The vectors $\vec{C}_N(t)$ and $\vec{X}_N(t)$ are expressed as follows.

$$\vec{C}_N(t) = \begin{bmatrix} c_1 \\ c_2 \\ \cdot \\ \cdot \\ c_{N_1} \\ c_{N_1+1} \\ c_{N_1+2} \\ \cdot \\ \cdot \\ c_N \end{bmatrix} = \begin{bmatrix} a_1 \\ a_2 \\ \cdot \\ \cdot \\ a_{N_1} \\ b_1 \\ b_2 \\ \cdot \\ \cdot \\ b_{N2} \end{bmatrix} \quad ; \quad \vec{X}_N(t) = \begin{bmatrix} x(t'-1) \\ x(t'-2) \\ \cdot \\ x(t'-N_1) \\ d(t-1) \\ d(t-2) \\ \cdot \\ \cdot \\ d(t-N_2) \end{bmatrix} \qquad (3)$$

The above discussion shows clearly that if the filter FTR obtains a good estimate of the echo d(t) even in the presence of phase roll said echo will be effectively blanked at the output Sout of the canceller thus avoiding production of its bothersome effects on the far-end talker.

Now we shall discuss the other cases of operation of the echo canceller.

In the case where the canceller is in the initial transitory phase in the presence of the voice of the far-end talker only the block RIT calculates the propagation delay of the actual echo signal d(t).

The calculation is done by a process of correlation of the voice samples x(t) of the far-end talker with the actual echo samples d(t). Said correlation process determines the point of maximum resemblance of these two signals and thus identifies the propagation delay.

During the calculation there is sent to the block CAC the signal INIB which causes zeroing of the vector of the adaptive coefficients $\vec{C}_N$ (t); otherwise in this phase the calculation algorithm would have a longer convergence time.

When the calculation is finished the block RIT removes the signal INIB and sends to the block CAC the signal INDX.

In addition during rated operation of the canceller the block RIT holds the residual echo e'(t) output from the center clipper CNL under constant observation. If it exceeds a certain predetermined threshhold it recalculates the propagation delay.

Now we shall examine the case in which there is present the voice of the far-end talker and/or the near-end talker's.

This condition is detected by the block RDC which keeps under constant observation the signals x(t) and d(t) comparing them appropriately with each other.

Supposing that the hybrid coil HIB attenuates the echo signal by at least 6dB, if the difference of level between the signals x(t) and d(t) is less than 6db it means that on the line L4 there is either the simultaneous presence of the voices of the remote and near-end talkers or the presence of voice of the near-end talker only. Under these conditions, since the signal e(t) used by the block CAC would be basically voice of the near-end talker, the signal INT becomes active and zeros the coefficients $a_k$ and $b_k$, interrupting the silencing of the residual echo to avoid cutting off said voice.

With reference to FIG. 2 where the same signals of FIG. 1 are indicated by the same symbols we see the block CAC which calculates the adaptive coefficients of the filter FTR of FIG. 1. It consists of a block VET which calculates a vector $\vec{X}_N$ (t) identical with the input vector calculated by the filter FTR, a block MAI which calculates a matrix indicated by $\vec{R}_{NN}^{-1}$ (τ-M) hereinafter defined as the inverse autocorrelation matrix of the vector $\vec{X}_N$ (t) (the meaning of the temporal variable τ will be explained below), a block VGK which calculates a vector $\vec{K}_N$ (t) called hereinafter Kalman's gain vector, and lastly ACF which calculates the vector of the coefficients $\vec{C}_N$ (t).

The signals x(t) , d(t) and INDX reach the same number of inputs of the block VET which delays the samples of x(t) in relation to those of d(t) by a number of sampling periods expressed by INDX to output the vector

$\vec{X}_N$ (t). Said vector is placed at a first input of the blocks VGK and MAI.

In view of the above it can be understood how the functions of the delaying circuit included in the filter FTR can actually be performed by the block VET.

The output of the block VGK is the vector $\vec{K}_N$ (t) which reaches a first input of the block ACF and a second input of the block MAI. The output of the block MAI is the matrix $\vec{R}_{NN}^{-1}$ (τ-M) placed at a second input of the block VGK.

The signal (e)t reaches a first input of the block ACF whose output is the vector of the coefficients $\vec{C}_N$ (t). The signal INIB reaches both a second input of the block ACF, causing zeroing of said vector of the coefficients, and a third input of the block MAI causing initializing of the matrix $\vec{R}_{NN}^{-1}$ (τ-M).

The signal INT reaches an input of all the blocks belonging to the block CAC and disables their operation.

The adaptation algorithm of the coefficients was developed in an innovative manner starting from a known algorithm such as conventional Kalman. A detailed description of Kalman is given for example on pages 413-417 of the book entitled 'Digital Communication' by John G. Proakis published by International Student Editions.

The optmization criterion of the coefficients on which is based the Kalman algorithm is minimization of the mean square error or of the power of the residual echo e(t).

Kalman's algorithm has a reduced convergence time approximately equal to N x P where N is the number of the adaptive coefficients and P is the sampling frequency period of the signals x(t) and d(t).

On the other hand adaptation of the coefficients involves considerable complexity of calculation and consequently long processing time.

To overcome this drawback the innovative criterion defined above 'decimation of the square error' was introduced in the calculation of the adaptive coefficients.

In view of the above the blocks VGK, MAI and ACF update their outputs at each iteration. But the block VET updates the vector $\vec{X}_N$ (t) at each sampling period P because decimation of the square error and not of the voice signal of the talker is made.

Decimation brings the benefit of reducing by a factor M a considerable part of the arithmetical operations performed by Kalman's algorithm in each sampling interval, allowing great simplification of the circuits which perform it. It simultaneously reduces by approximately one factor M the convergence speed of Kalman's algorithm but this drawback is overcome by the fact that the convergence speed is very high.

M = 3 was chosen as a value allowing compensation of a 4Hz phase roll and implementation of several echo cancellers with a single microprocessor specialized in digital-signal processing.

The decimated mean square error represented by ε(t) is expressed in the following manner:-

$$\epsilon(t) = \sum_{n=iM}^{t} \lambda^{\tau-n} [d(n) - \hat{d}(n)]^2 = \sum_{n=iM}^{t} \lambda^{\tau-n} e^2(n) \qquad (4)$$
$$i = 0, 1, 2, \ldots, IN[t/M]$$

where the symbol IN[...] means the entire t/M part, M is the factor of decimation and increase of the discretized time variable n, τ = MxIN [t/M], λ is a decay factor between 0 and 1 which permits following the rapid variations in time of the characteristics of the echo channel. For example for t = 6 and M = 3 we have:-

$$\varepsilon(6) = \lambda^6 e^2(0) + \lambda^3 e^2(3) + \lambda^0 e^2(6)$$

Minimization of the decimated mean square error ε(t) is obtained by making equal to zero its partial derivative made in relation to the adaptive coefficients N. This operation leads to a linear system which, omitting all the mathematical passages known per se, is expressed by the following equation known as the Wiener-Hopf equation:-

$$\vec{R}_{NN}(t) \ \vec{C}_N(t) \ - \ \vec{\alpha}_N(t) \tag{5}$$

where $\vec{C}_N$ (t) indicates the vector of the adaptive coefficients $a_k$ and $b_k$, $\vec{R}_{NN}$ (t) indicates the following autocorrelating matrix of the input vector $\vec{X}_N$ t) :-

$$\vec{R}_{NN}(t) \ - \ \sum_{n=iM}^{t} \lambda^{\tau-n} \ \vec{X}_N(n) \ \vec{X}_N^T(n) \tag{6}$$

$$i \ - \ 0,1,2,\ldots,IN[t/M]$$

and $\alpha_N(t)$ indicates a cross correlation vector between the input signal $\vec{X}_N$ (t) and the actual echo signal d(t). The vector $\alpha_N(t)$ is expressed as follows:-

$$\vec{\alpha}_N(t) \ - \ \sum_{n=iM}^{t} \lambda^{\tau-n} \ d(n) \ \vec{X}_N(n) \tag{7}$$

$$i \ - \ 0,1,2,\ldots,IN[t/M]$$

The solution of equation (5) is as follows:-

$$\vec{C}_N(t) \ - \ \vec{R}_{NN}^{-1}(t) \ \vec{\alpha}_N(t) \tag{8}$$

where $\vec{R}_{NN}^{-1}$ (t) is the inverse autocorrelation vector of the input $\vec{X}_N$ (t) which enjoys the symmetry property with repect to the principal diagonal.

The algorithm seeks iteratively the solution to the equation (5), thus avoiding solving the system of N equations expressed by (8) at each new block of M samples of $\vec{X}_N$ (t) received by the block CAC.

It assumes knowledge of the solution of the equation (8) at instant $\tau$-M and therefrom is derived the following solution at instant t calculated by the block ACF:-

$$\vec{C}_N(t) \ - \ \vec{C}_N(\tau\text{-}M) + \vec{K}_N(\tau) \ e(\tau) \tag{9}$$

The term $\vec{K}_N$ ($\tau$) is an N-dimensional vector called Kalman's gain vector and defined as:-

$$\vec{K}_N(t) \ - \ \frac{\vec{R}_{NN}^{-1}(\tau\text{-}M) \ \vec{X}_N(\tau)}{\lambda^M \ + \ \vec{X}_N^T(\tau) \ \vec{R}_{NN}^{-1}(\tau\text{-}M) \ \vec{X}_N(\tau)} \tag{10}$$

where $\vec{R}_{NN}^{-1}$ ($\tau$-M) is the inverse autocorrelation matrix of the input vector $\vec{X}_N$ ($\tau$-M) calculated recursively using the following expression:-

$$\vec{R}_{\overline{NN}}^{-1}(t) \quad = \quad \frac{1}{\lambda^M} \left\{ \quad \vec{R}_{\overline{NN}}^{-1}(\tau-M) \quad - \quad \vec{K}_N(\tau) \ \vec{X}_N^T(\tau) \ \vec{R}_{\overline{NN}}^{-1}(\tau-M) \right\} \qquad (11)$$

For the congruity of the entire iterative process expressed in (9), (10) and (11) there is initialized in a nonlimiting manner both the vector of the adaptive coefficients zeroing its elements and the autocorrelation matrix zeroing all its elements excepting those belonging to the principal diagonal placed at a very small value to ensure nonsingularity of the matrix.

As can be seen in (9) the present value of the coefficients is obtained by adding to the value they have at a certain prior instant the present value (t), a correction step given by $\vec{K}_N$ ($\tau$) and e($\tau$).

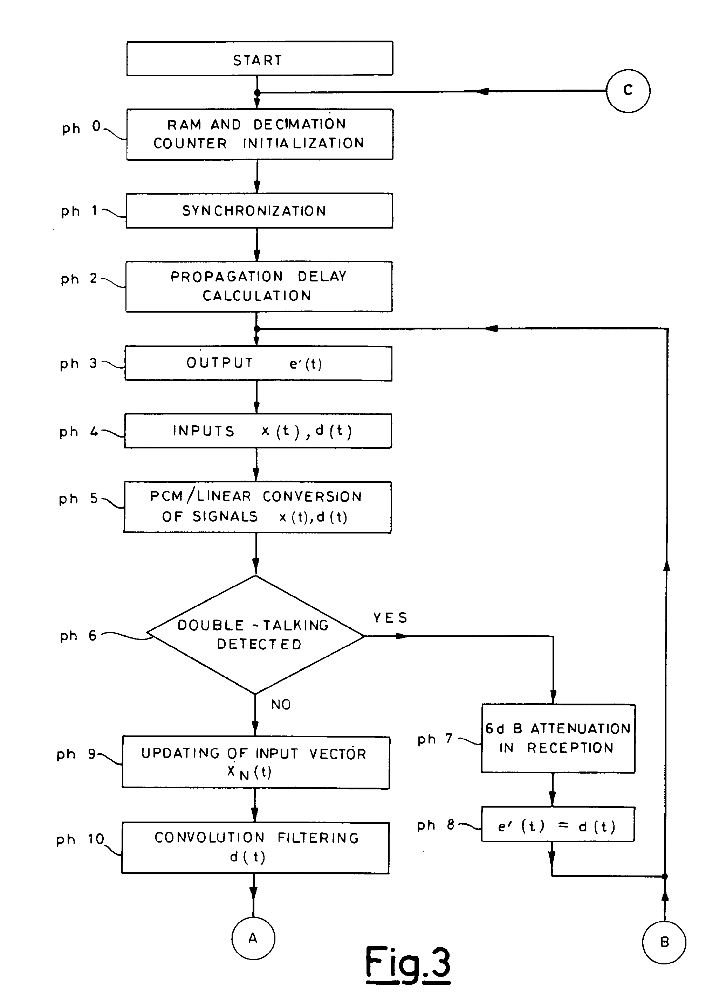

FIGS. 3, 4 and 5 are flow charts of the sequence of operations performed by a microprocessor specialized in digital signal processing and used to implement the echo canceller which is the object of the present invention.

In phase 0 (FIG. 3) are performed the operations of initialization of the reading and writing memory and of some registers of the microprocessor such as for example the square error decimation counter. In phase 1 the unit then proceeds to the synchronization operation.

In phase 2 is implemented the block RIT of FIG. 1 as regards calculation of the propagation delay of the actual echo d(t). In this phase which has a duration depending on the abovesaid delay the vector of the adaptive coefficients is zeroed.

In phases 3 and 4 are performed the operations of output of the samples e'(t) and input of the samples x(t) and d(t) respectively. In phase 5 is performed conversion of the signals x(t) and d(t) codified in PCM 8 bits compressed in accordance with law A in signals codified in linear form at 13 bits. This operation is performed by means of a conversion table contained in a read-only memory inside the microprocessor. Conversion takes place using the PCM signal to address the corresponding linear signal contained in the memory.

With phase 6 processing the unit implements the double talking detector RDC of FIG. 1. In particular in phase 6 the unit compares the two signals x(t) and d(t) and, as explained in detail in the description of the block RDC, detects the double talking condition. If the condition is verified, in phase 7 the unit inserts a 6dB attenuation on the receiving side, block ATT of FIG. 1 and in phase 8 inhibits silencing of the residual echo e'(t) and zeroes the vector of the adaptive coefficients, returning then to the data output phase 3. If the double talking condition is not verified it means that there is voice only of the far-end talker and in this case the unit continues to process the subsequent phases.

In phase 9 the unit updates the vector $\vec{X}_N$ (t) of the input samples, formula (3), eliminating the samples x(t'-$N_1$) and d(t-$N_2$), moving the remaining samples one position and inserting the sample x(t'-1) at the head of the $N_1$ voice samples of the far-end talker and the sample d(t-1) at the head of the $N_2$ actual echo samples to be processed.

In phase 10 the microprocessor implements the recursive convolution filter FTR of FIG. 1 to obtain the estimated echo $\hat{d}$(t) in accordance with formula (2).

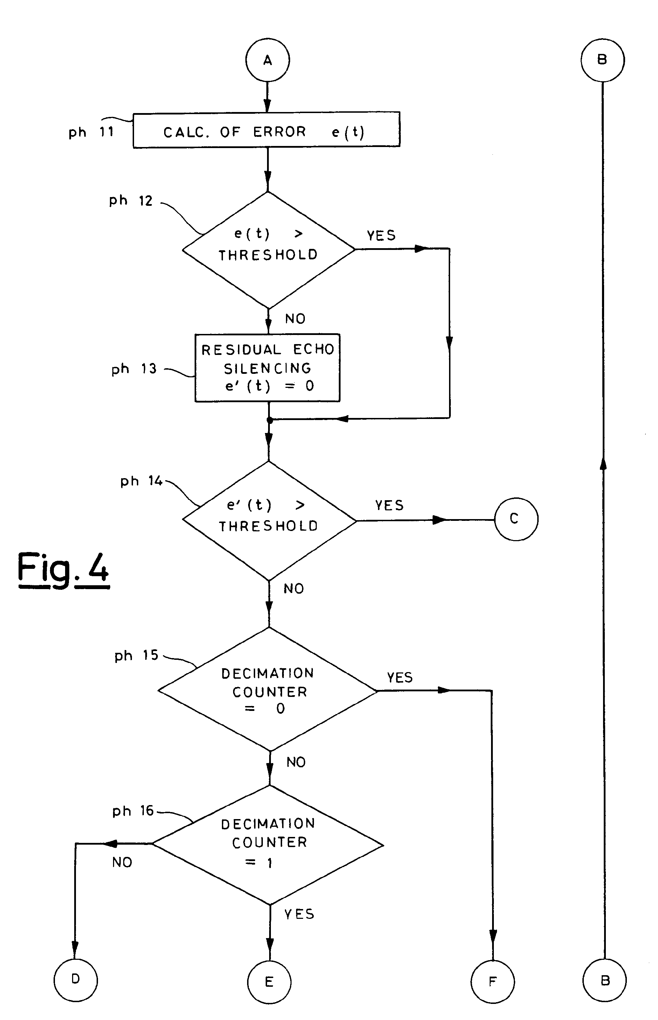

In phase 11 (FIG. 4) the unit calculates the residual echo, or error signal e(t), from the difference between the actual echo d(t) and the estimated echo $\hat{d}$(t), block SOT of FIG. 1.

By processing phases 12 and 13 the unit implements the center-clipper CNL of FIG. 1. In particular in phase 12 the unit compares the signal e(t) with an appropriate threshhold depending on the signal x(t). If e(t) is less than said threshhold, in phase 13 there is created silencing of the residual echo. Otherwise the programme goes directly from phase 12 to phase 14, bypassing phase 13, to allow the signal e(t) to pass unchanged to the output of the canceller.

In phase 14 is performed another function of the block RIT of FIG. 1, i.e. monitoring of the signal e'(t) which comes out of the canceller. If an appropriate fraction of the signal x(t) is less than the value of the samples of e'(t) there is a leap to phase 0 which reinitializes the unit and recalculates the propagation delay because very probably it is considerably changed. If the previous condition is not verified the programme goes into phase 15.

It is useful to remember that, because of processing complexity, calculation of Kalman's N-dimensional gain vector, updating of the inverse autocorrelation matrix of the order N x N and updating of the N-dimensional vector of the adaptive coefficients, is completely performed only at each iteration including the M = 3 consecutive sampling intervals of duration 125 μs each designated frames 0, 1 and 2 respectively.

The above calculations performed by the programme in phases 17 to 24 inclusive are equally divided between the three frames. At the end of the processing for a generic frame the program returns cyclically to phase 3 (FIG. 3).

Phases 15 and 16 (FIG. 4) are tests of the content of the decimation counter designed to establish in which of the frames the program has arrived.

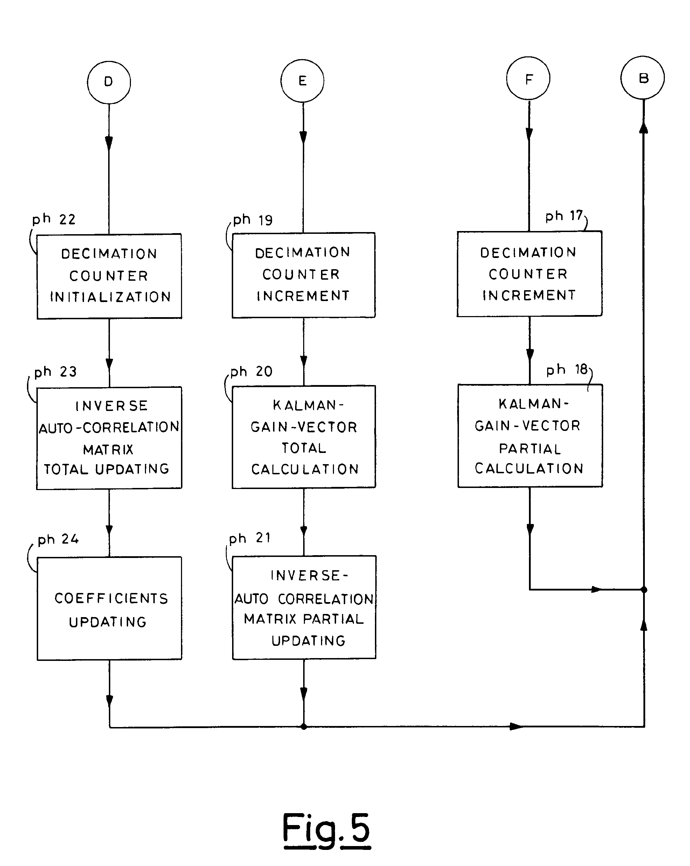

In frame 0 of the ith iteration the microprocessor increments the decimation counter, phase 17 (FIG. 5), so that the following work frame will be frame 1 of the same iteration and proceeds in phase 18 of the current frame with the partial calculation of Kalman's gain vector, performing 70% of the arithmetical operations necessary.

In frame 1 of the ith iteration the microprocessor increments the decimation counter, phase 19, so that the following work frame will be frame 2 of the same iteration and proceeds in phase 20 of the current frame to completion of the calculation of Kalman's gain vector. In the following phase 21 of said frame the unit partially updates the inverse autocorrelation matrix, performing 40% of the arithmetical operations.

In the last frame of the ith iteration the microprocessor unit initializes the decimation counter, phase 22, so that the following work frame will be frame 0 (i + 1)th iteration. Then in phase 23 of the current frame it completes updating of the inverse autocorrelation matrix. In the following phase 24 of said frame the unit calculates the new value of the elements belonging to the vector of the adaptive filter coefficients by applying formula (9). Then it substitutes the old values with the present values.

From the description given the advantages of the method and device for adaptive digital cancellation of the echo generated in telephone connections with time-variant characteristics which is the object of the present invention are clear.

In particular they are the fact that the echo canceller obtained by said method estimates the echo signal by means of a recursive digital filter with adaptive coefficients which, compared with the transversal filter of conventional echo cancellers, has the double advantage of allowing a more accurate estimate and having a smaller number of coefficients to update.

The adaptation algorithm implemented has a convergence speed higher than that of the gradient algorithm used in the conventional echo cancellers, allowing the echo canceller which is the object of the present invention to maintain good performance even in the presence of a 4Hz phase roll.

In addition the 'decimation of the square error' in the calculation of the adaptive coefficients allows simplification of the circuitry and makes it possible to obtain several echo cancellers with a single microprocessor specialized in digital signal processing.

## Claims

1. Method for adaptive digital cancellation of the echo generated in telephone connections with characteristics varying rapidly in time and in which is estimated the initial propagation delay between the samples of a signal x(t) coming from a far-end talker and those of an echo signal d(t) produced by reflection of said signal x(t), t being the discretized temporal variable, and in which is accomplished appropriate adaptive digital filtering of said echo signal d(t) and of said signal x(t), the samples of the signal $\hat{x}(t)$ being delayed for the value of said initial propagation delay and said filtering producing samples $\hat{d}(t)$ of an estimation signal of the echo signal d(t) subsequently subtracted from a signal affected by an echo obtaining a residual echo signal e(t) characterized in that said adaptive digital filtering is a recursive filtering with adaptive coefficients which obtains said estimated echo samples $\hat{d}(t)$ by multiplication of a vector $\vec{C}_N(t)$ which includes said adaptive coefficients, the subscript N indicating the size of the vector, and an input

vector $\vec{X}_N(t)$ including both the delayed samples of the signal x(t) and the samples of the echo signal d(t); in that said vector of the coefficients $\vec{C}_N(t)$ is updated iteratively, at each iteration adding to the value which it had at a previous iteration the product of said residual echo signal e(t) multiplied by the present value of a gain vector $\vec{K}_N(t)$ obtained by the minimization criterion of the power of said residual echo e(t), said gain vector adapting the coefficients; and in that each iteration is accomplished in a predetermined number M>1 of periods of the sampling frequency of the digital signals x(t) and d(t).

2. Method for adaptive digital cancellation of the echo in accordance with claim 1 characterized in that said vector of coefficients $\vec{C}_N$ (t) includes a number $N_1$ of adaptive coefficients belonging to a first group $(a_k)$ placed in decreasing time order and a number $N_2$ of adaptive coefficients belonging to a second group $(b_k)$ placed in decreasing time order and in that said input vector $\vec{X}_N$ (t) includes said number $N_1$ of said samples of signal x(t) delayed by said initial propagation delay (INDX) placed in decreasing time order and said number $N_2$ of samples of the echo signal d(t) placed in decreasing time order.

3. Method for adaptive digital cancellation of the echo in accordance with either one of the above claims characterized in that said initial propagation delay of the echo signal d(t) is calculated upon insertion of the canceller and subsequently recalculated only when the level of said residual echo signal e(t) exceeds the appropriately determined threshhold.

4. Method for adaptive digital cancellation of the echo in accordance with any of the above claims characterized in that the present value of said gain vector $\vec{K}_N$ (t) is calculated using the following formula (10):-

$$\vec{K}_N(t) = \frac{\vec{R}_{NN}^{-1}(\tau - M)\ \vec{X}_N(\tau)}{\lambda^M + \vec{X}_N^T(\tau)\ \vec{R}_{NN}^{-1}(\tau - M)\ \vec{X}_N(\tau)}$$

where the symbol IN [...] means the entire part of t/M, $\tau = M \times IN$ [t/M], $\lambda$ indicates a decay factor between 0 and 1, $\vec{R}_{NN}^{-1}$ ($\tau$-M) indicates an inverse autocorrelation matrix of said input vector $\vec{X}_N$ ($\tau$-M), T being the transposition operator.

5. Method for adaptive digital cancellation of the echo in accordance with any of the above claims characterized in that the present value of said inverse autocorrelation matrix $\vec{R}_{NN}^{-1}$ (t) is calculated recursively using the following expression (11):-

$$\vec{R}_{NN}^{-1}(t) = \frac{1}{\lambda^M} \left\{ \vec{R}_{NN}^{-1}(\tau - M)\ -\ \vec{K}_N(\tau)\ \vec{X}_N^T(\tau)\ \vec{R}_{NN}^{-1}(\tau - M) \right\}$$

6. Method for adaptive digital cancellation of the echo in accordance with any of the above claims characterized in that said number $N_1$ of adaptive coefficients $(a_k)$ belonging to said first group is equal to 10 and that said number $N_2$ of adaptive coefficients $(b_k)$ belonging to said second group is equal to 10.

7. Method for adaptive digital echo cancellation in accordance with any of the above claims characterized in that said number M of periods of the sampling frequency of the digital signals x(t) and d(t) included in an iteration of the calculation of said vector $\vec{X}_N$ (t) of coefficients is 3.

8. Device for adaptive digital cancellation of the echo generated in telephone connections with characteristics varying rapidly in time including (a) a first block (RIT) which estimates the initial propagation delay between the samples of a signal x(t) coming from a far-end talker and those of an echo signal d(t) produced by reflection of said signal x(t), t being the discretized time variable; (b) an adaptive digital filter (FTR) at

11

whose inputs are placed the samples of said echo signal d(t) and the samples of said signal x(t) delayed by the value of said initial propagation delay and at whose output are present samples $\hat{d}(t)$ of an estimation signal of the echo signal d(t); and (c) a subtractor (SOT) which subtracts said samples $\hat{d}(t)$ from those of said echo signal d(t) obtaining a residual echo signal e(t) characterized in that said adaptive digital filter (FTR) is a recursive filter which includes a first group ($a_k$) and a second group ($b_k$) of adaptive coefficients and calculates the samples $\hat{d}(t)$ of said estimated echo signal d(t) recursively by multyplying a vector

$\vec{C}_N$ (t) which includes said groups of adaptive coefficients ($a_k$, $b_k$), the subscript N indicating the size of the vector, and an input vector $\vec{X}_N$ (t) of the digital filter (FTR) which includes said samples of the echo signal d(t) and said delayed voice samples of a far-end talker; in that it includes a second block (ACF) which updates said vector of the coefficients $\vec{C}_N$ (t) iteratively, at each iteration adding to the value which it had at a previous iteration the product of said residual echo signal e(t) and a gain vector $\vec{K}_N$ (t) obtained with the minimization criterion of the power of said residual echo e(t), said gain vector adapting the coefficients; and in that said second block (ACF) accomplishes an updating iteration of the vector of the adap-

tive coefficients $\vec{C}_N$ (t) in a predetermined number M>1 of periods of the sampling frequency of the digital signals x(t) and d(t).

**9.** Device for adaptive digital cancellation of the echo in accordance with claim 8 characterized in that said second block (ACF) organizes said vector of the coefficients $\vec{C}_N$ (t) so as to include a number $N_1$ of adaptive coefficients belonging to said first group ($a_k$) placed in decreasing temporal order and a number $N_2$ of adaptive coefficients belonging to said second group ($b_k$) placed in decreasing temporal order.

**10.** Device for adaptive digital cancellation of the echo in accordance with either of claims 8 or 9 above characterized in that it includes a third block (VET) which calculates said input vector $\vec{X}_N$ (t) of the digital filter (FTR) at whose inputs arrive the samples of said echo signal d(t), the samples of said signal x(t) coming from a far-end talker and a signal INDX coming from said block (RIT) which estimates the propagation delay of the echo d(t) and at whose output there is present said vector $\vec{X}_N'$ (t) which includes said number $N_1$ of samples of the signal x(t) placed in decreasing temporal order after being delayed by the value of said initial propagation delay indicated by INDX and said number $N_2$ of samples of the echo signal d(t) placed in decreasing temporal order.

**11.** Device for adaptive digital cancellation of the echo in accordance with any of claims 8 to 10 above characterized in that it includes a fourth block (CNL) which controls the level of said residual echo signal e(t) and, when said level exceeds an appropriately determined threshhold, imparts a command to said block (RIT) which recalculates the initial propagation delay (INDX) of the echo signal d(t).

**12.** Device for adaptive digital cancellation of the echo in accordance with any of claims 8 to 11 above characterized in that it comprises a fifth block (VGK) which receives as an input said input vector $\vec{X}_N$ (t)

and a inverse autocorrelation matrix $\vec{R}_{NN}^{-1}$ ($\tau$-M) of said vector $\vec{X}_N$ (t) evaluated in an iteration preceding the present one and calculates the present value of said gain vector $\vec{K}_N$ (t) using the following formula (10):-

$$\vec{K}_N(t) \quad = \quad \frac{\bar{R}_{NN}^{-1}(\tau-M)\ \vec{X}_N(\tau)}{\lambda^M \ + \ \vec{X}_N^T(\tau)\ \bar{R}_{NN}^{-1}(\tau-M)\ \vec{X}_N(\tau)}$$

where the symbol IN[...] means the entire part of t/M, $\tau$ = M x IN[t/M], $\lambda$ indicates a decay factor between 0 and 1, $\vec{X}_N T(\tau)$ being the transposed vector of $\vec{X}_N(\tau)$.

13. Device for adaptive digital cancellation of the echo in accordance with any of claims 8 to 12 above characterized in that it includes a sixth block (MAI) which receives as an input said input vector $\vec{X}_N$ (t) and

said gain vector $\vec{K}_N$ (t) and outputs said inverse autocorrelation matrix $\vec{R}_{NN}^{-1}$ (t) whose present value is calculated recursively using the following expression (11):-

$$\vec{R}_{NN}^{-1}(t) \quad = \quad \frac{1}{\lambda^M} \left\{ \ \vec{R}_{NN}^{-1}(\tau-M) \ - \ \vec{K}_{NN}(\tau)\ \vec{X}_N^T(\tau)\ \vec{R}_{NN}^{-1}(\tau-M) \ \right\}$$

14. Device for adaptive digital cancellation of the echo in accordance with any of claims 8 to 13 above characterized in that said number $N_1$ of adaptive coefficients ($a_k$) belonging to said first group is equal to 10 and that said number $N_2$ of adaptive coefficients ($b_k$) belonging to said second group is equal to 10.

15. Device for adaptive digital cancellation of the echo in accordance with any of claims 8 to 14 above characterized in that said number M of periods of the sampling frequency of the digital signals x(t) and d(t) included in an iteration of the calculation of said vector $\vec{C}_N$ (t) of coefficients is equal to 3.

## Patentansprüche

1. Methode zur adaptiven digitalen Kompensation eines Echos, das in Telefonverbindungen mit sich zeitlich schnell ändernden Charakteristiken erzeugt wird, und mit welcher die anfängliche Ausbreitungsverzögerung zwischen den Abtastwerten eines vom Sprecher am fernen Ende kommenden Signals x(t) und denen eines durch Reflexion des erwähnten Signals x(t) hervorgerufenen Echosignals d(t) geschätzt wird, wobei t die diskrete Zeitvariante darstellt, und mit welcher eine geeignete adaptive Filterung des erwähnten Echosignals d(t) und des erwähnten Signals x(t) vorgenommen wird, wobei die Abtastwerte des Signals x(t) um den Wert der anfänglichen Ausbreitungsverzögerung verzögert sind, und die erwähnte Filterung die Abtastwerte $\hat{d}(t)$ eines Schätzungssignals für das Echosignal d(t) produziert, die anschließend von dem mit Echo verseuchten Signal abgezogen werden, wodurch ein Restecho e(t) entsteht, **dadurch gekennzeichnet,**

daß die erwähnte digitale Filterung eine rekursive Filterung mit adaptiven Koeffizienten darstellt, die die erwähnten geschätzten Abtastwerte $\hat{d}(t)$ des Echos durch Multiplikation mit dem Vektor $\vec{C}_N$ (t) erzeugt, der die erwähnten adaptiven Koeffizienten, den die Größe des Vektors angebenden Normalindex N und den Eingangsvektor $\vec{X}_N$ (t) enthält, der seinerseits sowohl die verzögerten Abtastwerte des Signals x(t), als auch die Abtastwerte des Echosignals d(t) enthält;

daß der erwähnte Vektor des Koeffizienten $\vec{C}_N(t)$ iterativ auf den letzten Stand gebracht wird, wobei bei jeder Iteration zum Wert der vorhergehenden Iteration das Produkt des erwähnten Restechosignals e(t) addiert wird, multipliziert mit dem aus dem Minimierungskriterium für die Leistung des erwähnten Restechosignals e(t) resultierenden gegenwärtigen Wert des Verstärkungsvektors $\vec{K}_N$ (t), wobei der

erwähnte Verstärkungsvektor die Koeffizienten anpaßt, und

daß jede Iteration über eine vorher festgesetze Anzahl M>1 von Perioden der Abtastfrequenz der Digitalsignale x(t) und d(t) durchgefürt wird.

2. Methode zur adaptiven digitalen Kompensation des Echos in Übereinstimmung mit Anspruch 1, **dadurch gekennzeichnet**, daß der erwähnte Koeffizientenvektor $\vec{c}_N$ (t) eine Anzahl $N_1$ adaptiver Koeffizienten beinhaltet, die zu einer ersten, in abfallender zeitlicher Reihenfolge angeordeneten Gruppe ($a_k$) gehören, sowie eine Anzahl $N_2$ adaptiver Koeffizienten, die zu einer zweiten, in abfallender zeitlicher Reihenfolge angeordeneten Gruppe ($b_k$) gehören, wobei der erwähnte Eingangsvektor $\vec{X}_N$ (t) die Anzahl $N_1$ der erwähnten, in abfallender zeitlicher Reihenfolge angeordeneten Abtastwerte des durch die erwähnte anfängliche Ausbreitungsverzögerung (INDX) verzögerten Signals x(t) enthält, sowie die Anzahl $N_2$ der in abfallender zeitlicher Reihenfolge angeordeneten Abtastwerte des Echosignals d(t).

3. Methode zur adaptiven digitalen Kompensation des Echos in Übereinstimmung mit jedem der obigen Ansprüche, **dadurch gekennzeichnet**, daß die erwähnte anfängliche Ausbreitungsverzögerung des Echosignals d(t) sofort beim Einschalten des Echokompensators berechnet wird und danach nur dann neu berechnet wird, wenn der Pegel des erwähnten Restechosignals e(t) eine geeignet eingestellte Schwelle überschreitet.

4. Methode zur adaptiven digitalen Kompensation des Echos in Übereinstimmung mit jedem der obigen Ansprüche, **dadurch gekennzeichnet,** daß der Anfangswert des erwähnten Verstärkungsvektors $\vec{K}_N$ (t) mit dem folgenden Ausdruck (10) berechnet wird:

$$\vec{K}_N(t) \;=\; \frac{\vec{\overline{R_{NN}}}^{-1}(\tau - M)\; \vec{X}_N(\tau)}{\lambda^M \;+\; \vec{X}_N{}^T(\tau)\; \vec{R_{NN}}^{-1}(\tau - M)\; \vec{X}_N(\tau)}$$

wobei die Zeichen IN [...] den gesamten Ausdruck t/M, $\tau$ = M x N[t/M], $\lambda$ einen Ausschwingfaktor zwischen 0 und 1, und $\vec{R_{NN}}$-1 ($\tau$-M) eine inverse Autokorrelationsmatrix des erwähnten Eingangsvektors $\vec{X}_N$ ($\tau$-M) darstellen, mit T als Transpositionsoperator.

5. Methode zur adaptiven digitalen Kompensation des Echos in Übereinstimmung mit jedem der obigen Ansprüche, **dadurch gekennzeichnet,** daß der aktuelle Wert der erwähnten inversen Autokorrelationsmatrix $\vec{R_{NN}}$-1 (t) rekursiv mit der folgenden Formel (11) berechnet wird:

$$\vec{R_{NN}}^{-1}(t) \;=\; \frac{1}{\lambda M}\left\{ \vec{R_{NN}}^{-1}(\tau - M) \;-\; \vec{K}_N(\tau)\; \vec{X}_N{}^T(\tau)\; \vec{R_{NN}}^{-1}(\tau - M) \right\}$$

6. Methode zur adaptiven digitalen Kompensation des Echos in Übereinstimmung mit einem der obigen Ansprüche, **dadurch gekennzeichnet,** daß die erwähnte Zahl $N_1$ der zu der erwähnten ersten Gruppe gehörenden adaptiven Koeffizienten ($a_k$) gleich 10 ist, und daß die erwähnte Zahl $N_2$ der zu der erwähnten zweiten Gruppe gehörenden adaptiven Koeffizienten ($b_k$) gleich 10 ist.

7. Methode zur adaptiven digitalen Kompensation des Echos in Übereinstimmung mit jedem der obigen Ansprüche, **dadurch gekennzeichnet,** daß die erwähnte Zahl M von Perioden der Abtastfrequenz der Digitalsignale x(t) und d(t) in einer Iteration für die Berechnung des erwähnten Koeffizientenvektors $\vec{c}_N$ (t) gleich 3 ist.

8. Schaltung zur adaptiven digitalen Kompensation eines Echos, das in Telefonverbindungen mit sich zeitlich schnell ändernden Charakteristiken erzeugt wird, bestehend

(a) aus einem ersten Block (RIT) in welchem die anfängliche Ausbreitungsverzögerung zwischen den Abtastwerten eines vom Sprecher am fernen Ende kommenden Signals x(t) und denen eines durch Reflexion des Signals x(t) hervorgerufenen Echosignals d(t) geschätzt wird, wobei t die diskrete Zeitvariante darstellt und

(b) einem adaptiven Filter (FTR), an dessen Eingang x(t) die Abtastwerte des erwähnten Echosignals d(t) und die Abtastwerte des erwähnten Signals x(t) anliegen, verzögert um den Wert der anfänglichen Ausbreitungsverzögerung, und an dessen Ausgang die Abtastwerte $\hat{d}(t)$ eines Schätzungssignals für das Echosignal d(t) verfügbar sind; und

(c) einem Subtrahierer (SOT), der die erwähnten Abtastwerte $\hat{d}(t)$ von denen des erwähnten Echosignals d(t) abzieht, wodurch ein Restechosignal e(t) entsteht, **dadurch gekennzeichnet,**

daß das erwähnte digitale Filter (FTR) ein rekursives Filter mit einer ersten Gruppe ($a_k$) und einer zweiten Gruppe ($b_k$) adaptiver Koeffizienten darstellt und die erwähnten geschätzten Abtastwerte $\hat{d}(t)$ des

erwähnten Echosignals d(t) rekursiv durch Multiplikation mit dem Vektor $\vec{C}_N$ (t) berechnet, der die erwähnten Gruppen von adaptiven Koeffizienten ($a_k$, $b_k$), den die Größe des Vektors angebenden Normalindex N und den Eingangsvektor $\vec{X}_N$ (t) des Digitalfilters (FTR) enthält, das seinerseits die Abtastwerte des Echosignals d(t) und die erwähnten Sprachabtastwerte des Sprechers am fernen Ende enthält;

daß das Gerät einen zweiten Block (ACF) enthält, der den erwähnte Koeffizientenvektor $\vec{C}_N$ (t) iterativ auf den letzten Stand bringt, wobei bei jeder Iteration zum Wert der vorhergehenden Iteration das Produkt aus dem erwähnten Restechosignal e(t) und dem aus dem Minimierungskriterium für die Leistung des erwähnten Restechosignals e(t) resultierenden Verstärkungsvektor $\vec{K}_N$ (t) addiert wird, wobei der erwähnte Verstärkungsvektor die Koeffizienten anpaßt, und

daß der erwähnte zweite Block (ACF) eine Iteration zur Aktualisierung des adaptiven Koeffizientenvektors $\vec{C}_N$ (t) über eine vorher festgesetze Anzahl Perioden M>1 der Abtastfrequenz der Digitalsignale x(t) und d(t) durchführt.

9.  Schaltung zur adaptiven digitalen Kompensation eines Echos in Übereinstimmung mit Anspruch 8, **dadurch gekennzeichnet,**

daß der erwähnte zweite Block (ACF) den erwähnten Koeffizientenvektor $\vec{C}_N$ (t) so organisiert, daß er eine Anzahl $N_1$ adaptiver Koeffizienten beinhaltet, die zu einer ersten, in abfallender zeitlicher Reihenfolge angeordeneten Gruppe ($a_k$) gehören, sowie eine Anzahl $N_2$ adaptiver Koeffizienten, die zu einer zweiten, in abfallender zeitlicher Reihenfolge angeordneten Gruppe ($b_k$) gehören.

10.  Schaltung zur adaptiven digitalen Kompensation eines Echos in Übereinstimmung mit den oben angegebenen Ansprüchen 8 oder 9, **dadurch gekennzeichnet,**

daß diese einen dritten Block (VET) enthält, der den erwähnten Eingangsvektor $\vec{X}_N$ (t) des Digitalfilters (FTR) berechnet, an dessen Eingang die Abtastwerte des erwähnten Echosignals d(t) anliegen, wobei die Abtastwerte des erwähnten Signals x(t) von einem Sprecher am fernen Ende stammen, sowie ein Signal INDX anliegt, das von dem erwähnten Block (RIT) stammt, der die Ausbreitungsverzögerung des Echos d(t) abschätzt und an dessen Ausgang der erwähnte Vektor $\vec{X}_N$ (t) anliegt, der nach Verzögerung mit dem Wert der erwähnten, mit INDX bezeichneten anfänglichen Ausbreitungsverzögerung, die erwähnte Anzahl $N_1$ von Abtastwerten des Signals x(t) in abfallender zeitlicher Reihenfolge, sowie die erwähnte Anzahl $N_2$ von Abtastwerten des Echosignals d(t) in abfallender zeitlicher Reihenfolge enthält.

11.  Schaltung zur adaptiven digitalen Kompensation eines Echos in Übereinstimmung mit den oben angegebenen Ansprüchen 8 bis 10, **dadurch gekennzeichnet,** daß diese einen vierten Block (CNL) enthält, der den Pegel des erwähnten Restechos e(t) steuert und, wenn der erwähnte Pegel eine entsprechend eingestellte Schwelle überschreitet, einen Befehl zu dem erwähnten Block (RIT) aussendet, der die anfängliche Ausbreitungsverzögerung (INDX) des Echsignals d(t) neu berechnet.

12.  Schaltung zur adaptiven digitalen Kompensation eines Echos in Übereinstimmung mit irgendeinem der oben angegebenen Ansprüche 8 bis 11, **dadurch gekennzeichnet,** daß diese einen fünften Block (VGK) enthält, der am Eingang den erwähnten Eingangsvektor

$\vec{X}_N$ (t) empfängt, sowie eine in der vorhergehenden Iteration bewertete inverse Autokorrelationsmatrix $\vec{R}_{NN}^{-1}$ (τ-M) des erwähnten Vektors $\vec{X}_N$ (t), und den aktuellen Wert des erwähnten Verstärkungsvektors $\vec{K}_N$ (t) mit dem folgenden Ausdruck (10) berechnet:

$$\vec{K}_N(t) \;=\; \frac{\vec{R}_{NN}^{-1}(\tau-M)\ \vec{X}_N(\tau)}{\lambda^M \;+\; \vec{X}_N^T(\tau)\ \vec{R}_{NN}^{-1}(\tau-M)\ \vec{X}_N(\tau)}$$

wobei die Zeichen IN [...] den gesamten Ausdruck t/M, τ = M x IN[t/M], λ einen Ausschwingfaktor zwischen 0 und 1, und $\vec{X}_N^T$ (τ) den transponierten Vektor von $\vec{X}_N$ (t) bedeuten.

13. Schaltung zur adaptiven digitalen Kompensation eines Echos in Übereinstimmung mit irgendeinem der oben angegebenen Ansprüche 8 bis 12, **dadurch gekennzeichnet,**
   daß diese einen sechsten Block (MAI) enthält, der am Eingang den erwähnten Eingangsvektor $\vec{X}_N$ (t) und den Verstärkungsvektor $\vec{K}_N$ (t) empfängt, und am Ausgang die erwähnte inverse Autokorrelationsmatrix $\vec{R}_{NN}^{-1}$ (t-M) zur Verfügung stellt, deren aktueller Wert rekursiv unter Benutzung des folgenden Ausdrucks (11) berechnet wird:

$$\vec{R}_{NN}^{-1}(t) \;=\; \frac{1}{\lambda^M}\left\{ \vec{R}_{NN}^{-1}(\tau-M) \;-\; \vec{K}_{NN}(\tau)\ \vec{X}_N^T(\tau)\ \vec{R}_{NN}^{-1}(\tau-M) \right\}$$

14. Schaltung zur adaptiven digitalen Kompensation eines Echos in Übereinstimmung mit einem der oben angegebenen Ansprüche 8 bis 13, **dadurch gekennzeichnet,**
   daß die erwähnte Anzahl $N_1$ der zur ersten Gruppe gehörenden adaptiven Koeffizienten ($a_k$) gleich 10 ist und die erwähnte Anzahl $N_2$ der zur zweiten Gruppe gehörenden adaptiven Koeffizienten ($b_k$) gleich 10 ist.

15. Schaltung zur adaptiven digitalen Kompensation eines Echos in Übereinstimmung mit einem der oben angegebenen Ansprüche 8 bis 14, **dadurch gekennzeichnet,**
   daß die erwähnte Anzahl M von Perioden der in einer Iteration der Berechnung des Vektors $\vec{C}_N$ (t) enthaltenen Abtastfreqeunz der Digitalsignale x(t) und d(t) gleich 3 ist.

**Revendications**

1. Procédé pour l'annulation numérique adaptative de l'écho qui est généré dans des connexions téléphoniques ayant des caractéristiques qui varient rapidement dans le temps, et dans lequel on estime le retard de propagation initial entre les échantillons d'un signal x(t) provenant d'un locuteur d'extrémité éloignée et ceux d'un signal d'écho d(t) qui est produit par la réflexion du signal x(t), t étant la variable temporelle convertie sous forme discrète, et dans lequel on effectue un filtrage numérique adaptatif approprié du signal d'écho d(t) et du signal x(t), les échantillons du signal x(t) étant retardés de la valeur du retard de propagation initial, et le filtrage produisant des échantillons $\hat{d}$(t) d'un signal d'estimation du signal d'écho d(t) qui sont ensuite soustraits d'un signal affecté par un écho, pour donner un signal d'écho résiduel e(t), caractérisé en ce que le filtrage numérique adaptatif est un filtrage récursif avec des coefficients adaptatifs qui obtient les échantillons d'écho estimés $\hat{d}$(t) par multiplication d'un vecteur $\vec{C}_N$ (t) qui comprend les coefficients adaptatifs, l'indice N désignant la dimension du vecteur, et d'un vecteur d'entrée $\vec{X}_N$ (t), comprenant à la fois les échantillons retardés du signal x(t) et les échantillons du signal d'écho $\hat{d}$(t); et en ce que le vecteur précité des

coefficients, $\vec{C}_N$ (t), est actualisé de façon itérative, en ajoutant à chaque itération, à la valeur qu'il avait à une itération précédente, le produit du signal d'écho résiduel e(t) et de la valeur présente d'un vecteur de gain $\vec{K}_N$ (t) qui est obtenu par le critère de minimisation de la puissance de l'écho résiduel e(t), ce vecteur de gain adaptant les coefficients; et en ce que chaque itération est accomplie dans un nombre prédéterminé, M > 1, de périodes correspondant à la fréquence d'échantillonnage des signaux numériques x(t) et d(t).

2. Procédé pour l'annulation numérique adaptative de l'écho selon la revendication 1, caractérisé en ce que le vecteur de coefficients $\vec{C}_N$ (t) comprend un nombre $N_1$ de coefficients adaptatifs appartenant à un premier groupe ($a_k$), placés en ordre temporel décroissant, et un nombre $N_2$ de coefficients adaptatifs appartenant à un second groupe ($b_k$), placés en ordre temporel décroissant, et en ce que le vecteur d'entrée $\vec{X}_N$ (t) comprend le nombre $N_1$ d'échantillons du signal x(t), retardés du retard de propagation initial (INDX),placés en ordre temporel décroissant, et le nombre $N_2$ d'échantillons du signal d'écho d(t) placés en ordre temporel décroissant.

3. Procédé pour l'annulation numérique adaptative de l'écho selon l'une ou l'autre des revendications ci-dessus, caractérisé en ce que le retard de propagation initial du signal d'écho d(t) est calculé au moment de l'insertion de l'annuleur d'écho, et il est ensuite recalculé seulement lorsque le niveau du signal d'écho résiduel e(t) dépasse le seuil déterminé de façon appropriée.

4. Procédé pour l'annulation numérique adaptative de l'écho selon l'une quelconque des revendications ci-dessus, caractérisé en ce que l'on calcule la valeur présente du vecteur de gain $\vec{K}_N$ (t) en utilisant la formule (10) suivante :

$$\vec{K}_N(t) = \frac{\vec{R}_{NN}^{-1}(\tau-M)\ \vec{X}_N(\tau)}{\lambda^M + \vec{X}_N^T(\tau)\ \vec{R}_{NN}^{-1}(\tau-M)\ \vec{X}_N(\tau)}$$

dans laquelle le symbole IN[...] désigne la partie entière de t/M, $\tau = M \times IN[t/M]$, $\lambda$ désigne un facteur de décroissance qui est compris entre 0 et 1, $\vec{R}_{NN}^{-1}(\tau-M)$ désigne une matrice d'autocorrélation inverse du vecteur d'entrée $\vec{X}_N(\tau-M)$, T étant l'opérateur de transposition.

5. Procédé pour l'annulation numérique adaptative de l'écho selon l'une quelconque des revendications ci-dessus, caractérisé en ce que l'on calcule de manière récursive la matrice d'autocorrélation inverse $\vec{R}_{NN}^{-1}(t)$ en utilisant l'expression (11) suivante :

$$\vec{R}_{NN}^{-1}(t) = \frac{1}{\lambda^M}\left\{\vec{R}_{NN}^{-1}(\tau-M) - \vec{K}_N(\tau)\ \vec{X}_N^T(\tau)\ \vec{R}_{NN}^{-1}(\tau-M)\right\}$$

6. Procédé pour l'annulation numérique adaptative de l'écho selon l'une quelconque des revendications ci-dessus, caractérisé en ce que le nombre $N_1$ de coefficients adaptatifs ($a_k$) appartenant au premier groupe est égal à 10, et en ce que le nombre $N_2$ de coefficients adaptatifs ($b_k$) appartenant au second groupe est égal à 10.

7. Procédé pour l'annulation d'écho numérique adaptative selon l'une quelconque des revendications ci-dessus, caractérisé en ce que le nombre M de périodes de la fréquence d'échantillonnage des signaux numériques x(t) et d(t) qui sont incluses dans une itération du calcul du vecteur de coefficients $\vec{C}_N$ (t) est égal à 3.

8. Dispositif pour l'annulation numérique adaptative de l'écho qui est généré dans des connexions téléphoniques ayant des caractéristiques qui varient rapidement dans le temps, comprenant (a) une première unité (RIT) qui estime le retard de propagation initial entre les échantillons d'un signal x(t) provenant d'un locuteur d'extrémité éloignée, et ceux d'un signal d'écho d(t) qui est produit par la reflexion de ce signal x(t), t étant la variable de temps convertie sous forme discrète; (b) un filtre numérique adaptatif (FTR) aux entrées duquel sont appliqués les échantillons du signal d'écho d(t) et les échantillons du signal x(t), retardée de la valeur du retard de propagation initial, et aux sorties duquel apparaissent des échantillons $\hat{d}$(t) d'un signal d'estimation du signal d'écho d(t); et (c) un soustracteur (SOT) qui soustrait les échantillons $\hat{d}$(t) de ceux du signal d'écho d(t), pour obtenir un signal d'écho résiduel e(t), caractérisé en ce que le filtre numérique adaptatif (FTR) est un filtre récursif qui comprend un premier groupe ($a_k$) et un second groupe ($b_k$) de coefficients adaptatifs, et qui calcule de façon récursive les échantillons $\hat{d}$(t) du signal d'écho estimé d(t), en multipliant un vecteur $\vec{C}_N$ (t) qui comprend les groupes précités de coefficients adaptatifs

($a_k$, $b_k$), l'indice N désignant la dimension du vecteur, et un vecteur d'entrée $\vec{X}_N$ (t) du filtre numérique (FTR), qui comprend les échantillons du signal d'écho d(t) et les échantillons vocaux retardés du locuteur de l'extrémité éloignée; et en ce qu'il comprend une seconde unité (ACF) qui actualise de façon itérative le vecteur des coefficients $\vec{C}_N$ (t), en ajoutant à chaque itération, à la valeur qu'il avait à une itération précédente, le produit du signal d'écho résiduel e(t) et d'un vecteur de gain $\vec{K}_N$ (t) qui est obtenu avec le critère de minimisation de la puissance de l'écho résiduel e(t), le vecteur de gain adaptant les coefficients; et en ce que la seconde unité (ACF) effectue une itération d'actualisation du vecteur des coeffi-

cients adaptatifs $\vec{C}_N$ (t) dans un nombre prédéterminé M > 1 de périodes correspondant à la fréquence d'échantillonnage des signaux numériques x(t) et d(t).

9. Dispositif pour l'annulation numérique adaptative de l'écho selon la revendication 8, caractérisé en ce que la seconde unité (ACF) organise le vecteur des coefficients $\vec{C}_N$ (t) de façon à inclure un nombre $N_1$ de coefficients adaptatifs appartenant au premier groupe ($a_k$) placés en ordre temporel décroissant, et un nombre $N_2$ de coefficients adaptatifs appartenant au second groupe ($b_k$), placés en ordre temporel décroissant.

10. Dispositif pour l'annulation numérique adaptative de l'écho selon l'une quelconque des revendications 8 ou 9 ci-dessus, caractérisé en ce qu'il comprend une troisième unité (VET) qui calcule le vecteur d'entrée

$\vec{X}_N$ (t) du filtre numérique (FTR) aux entrées duquel arrivent les échantillons du signal d'écho d(t), les échantillons du signal x(t) provenant d'un locuteur de l'extrémité éloignée, et un signal INDX qui provient de l'unité (RIT) qui estime le retard de propagation de l'écho d(t), et à la sortie duquel apparaît le vecteur

$\vec{X}_N$ (t) qui comprend le nombre $N_1$ d'échantillons du signal x(t), placés en ordre temporel décroissant après avoir été retardés par la valeur du retard de propagation initial qui est indiqué par INDX, et le nombre $N_2$ d'échantillons du signal d'écho d(t) placés en ordre temporel décroissant.

11. Dispositif pour l'annulation numérique adaptative de l'écho selon l'une quelconque des revendications 8 à 10 ci-dessus, caractérisé en ce qu'il comprend une quatrième unité (CNL) qui commande le niveau du signal d'écho résiduel e(t) et, lorsque ce niveau dépasse un seuil déterminé de façon appropriée, cette unité applique un ordre à l'unité (RIT) qui recalcule le retard de propagation initial (INDX) du signal d'écho d(t).

12. Dispositif pour l'annulation numérique adaptative de l'écho selon l'une quelconque des revendications 8 à 11 ci-dessus, caractérisé en ce qu'il comprend une cinquième unité (VGK) qui reçoit à titre de signaux d'entrée le vecteur d'entrée $\vec{X}_N$ (t) et une matrice d'autocorrélation inverse $\vec{R}_{NN}^{-1}$ ($\tau$ -M) du vecteur

$\vec{X}_N$ ((t) évalué dans une itération précédant la présente, et qui calcule la valeur présente du vecteur

de gain $\vec{K}_N$ (t) en utilisant la formule (10) suivante :

$$\vec{K}_N(t) = \frac{\vec{R}_{NN}^{-1}(\tau - M) \ \vec{X}_N(\tau)}{\lambda^M + \vec{X}_N^T(\tau) \ \vec{R}_{NN}^{-1}(\tau - M) \ \vec{X}_N(\tau)}$$

dans laquelle le symbole INT[...] désigne la partie entière de t/M, $\tau = M \times IN[t/M]$, $\lambda$ désigne un facteur de décroissance qui est compris entre 0 et 1, $\vec{X}_N$ ($\tau$) étant le vecteur transposé de $\vec{X}_N$ ($\tau$).

13. Dispositif pour l'annulation numérique adaptative de l'écho selon l'une quelconque des revendications 8 à 12 ci-dessus, caractérisé en ce qu'il comprend une sixième unité (MAI) qui reçoit à titre de signaux d'entrée le vecteur d'entrée $\vec{X}_N$ (t) et le vecteur de gain $\vec{K}_N$ (t), et qui présente en sortie la matrice d'autocorrélation inverse $\vec{R}_{NN}^{-1}$ (t) dont la valeur présente est calculée de manière récursive en utilisant l'expression (11) suivante :

$$\vec{R}_{NN}^{-1}(t) = \frac{1}{\lambda^M} \left\{ \vec{R}_{NN}^{-1}(\tau - M) - \vec{K}_{NN}(\tau) \ \vec{X}_N^T(\tau) \ \vec{R}_{NN}^{-1}(\tau - M) \right\}$$

14. Dispositif pour l'annulation numérique adaptative de l'écho selon l'une quelconque des revendications 8 à 13 ci-dessus, caractérisé en ce que le nombre $N_1$ de coefficients adaptatifs ($a_k$) appartenant au premier groupe est égal à 10, et le nombre $N_2$ de coefficients adaptatifs ($b_k$) appartenant au second groupe est égal à 10.

15. Dispositif pour l'annulation numérique adaptative de l'écho selon l'une quelconque des revendications 8 à 14 ci-dessus, caractérisé en ce que le nombre M de périodes correspondant à la fréquence d'échantillonnage des signaux numériques x(t) et d(t) qui sont incluses dans une itération du calcul du vecteur de coefficients $\vec{C}_N$ (t) est égal à 3.

Fig.1

Fig.2

START

ph 0 — RAM AND DECIMATION COUNTER INITIALIZATION

ph 1 — SYNCHRONIZATION

ph 2 — PROPAGATION DELAY CALCULATION

ph 3 — OUTPUT e′(t)

ph 4 — INPUTS x(t), d(t)

ph 5 — PCM/LINEAR CONVERSION OF SIGNALS x(t), d(t)

ph 6 — DOUBLE-TALKING DETECTED

YES / NO

ph 9 — UPDATING OF INPUT VECTOR $X_N(t)$

ph 10 — CONVOLUTION FILTERING d(t)

ph 7 — 6 dB ATTENUATION IN RECEPTION

ph 8 — e′(t) = d(t)

A    B    C

## Fig.3

22

## Fig.4

**Fig.5**